# EUROPEAN PATENT SPECIFICATION

(11) **EP 4 619 657 B1**
(45) Date of publication and mention of the grant of the patent: **30.09.2026**
(21) Application number: 23806396.0
(22) Date of filing: 16.11.2023
(51) Int. Cl.: F16D 69/02

(54) **IMPROVED FRICTION MATERIAL COMPOSITION AND ASSOCIATED FRICTION ELEMENT**
VERBESSERTE REIBUNGSMATERIALZUSAMMENSETZUNG UND ZUGEHÖRIGES REIBUNGSELEMENT
COMPOSITION AMÉLIORÉE DE MATÉRIAU DE FROTTEMENT ET ÉLÉMENT DE FROTTEMENT ASSOCIÉ

(30) Priority: 18.11.2022 IT 202200023793
(43) Date of publication of application: 24.09.2025
(73) Proprietor: ITT Italia S.r.l., 20045 Lainate (MI) (IT)
(72) Inventor: SIN XICOLA, Agustin, 12032 BARGE (CN) (IT); GALIMBERTI, Paolo, 12032 BARGE (CN) (IT); GENTA, Daniele, 12032 BARGE (CN) (IT); TROMBOTTO, Flavio, 12032 BARGE (CN) (IT); ACCOSSATO, Ylenia, 12032 BARGE (CN) (IT); BALESTRA, Simone, 12032 BARGE (CN) (IT); BAROLO, Giacomo, 12032 BARGE (CN) (IT)
(74) Representative: Studio Torta S.p.A.
(86) International application number: PCT/IB2023/061592
(87) International publication number: WO 2024/105609

(56) References cited:
- EP-A1- 4 006 120
- WO-A1-2022/215031
- DE-B3- 102019 107 368
- RU-C1- 2 081 133
- US-A- 3 998 650

## Description

### Cross-Reference to Related Applications

This Patent Application claims priority from Italian Patent Application No. 102022000023793 filed on November 18, P2022.

### Technical field

The present invention relates to a friction material composition particularly suitable for the manufacture of friction layers/blocks for friction elements such as braking elements to be incorporated, for example, in a vehicle braking system.

The invention also relates to an associated fiction element, for example brake pads or brake shoes for vehicles, made with this friction material composition and particularly but not exclusively suitable for electric vehicle.

The friction material composition of the present invention is free of asbestos, belonging to the so-called NAO ("Non-Asbestos Organic") type, and is substantially free of Copper.

### State of the art

With the rapid development of modern transportation industry, the number of electric vehicles is increasing day by day.

The replacement of combustion engine with an electrical one leads to much more silent vehicles. This is bearing higher attention to those noises generated by other car components, such as by the brake pad used in the braking system. Consequently, the bake pad used for electrical vehicles requires improved NVH (Noise, Vibration, Harshness) criterion for driving comfort.

Also at this purpose, it is known from an article published in the journal SAE 2007, the use of mixed titanates of different nature together with a substantial content of copper (about 5% by weight or more).

Unfortunately, copper, when used in a friction material composition designed to produce brake elements, may be seen as a polluting material. The states of Washington and California have banned the sale of friction materials containing more than 5% copper starting from 2021 and over 0.5% starting from 2023.

In addition to the copper regulation, the advent of vehicle electrification brings the silence of the vehicles to be a goal of paramount importance and requires the use of friction materials developed to obtain in use a tribological mechanisms such as the generation of low frequency noise is not produced. The tribological mechanisms that induces low frequency noise is known and is referred to as the "stick-slip" phenomenon.

In particular, the stick-slip phenomenon may bring to the generation of the so called "Creep groan" low frequency noise, especially at very low speeds of the vehicle. It is the classic example of a self-excited braking vibration by alternated episodes of sticking or adhesion and subsequent slipping of the brake pad on the brake disc during the braking process and, as a result, the coefficient of friction continuously varies between a static (stick phase) and dynamic (slip phase) values.

Various solutions are known in the art to try to reduce this phenomenon, but they either do not solve completely the problem or present additional drawbacks.

EP0959262 discloses a disc brake pad capable of reducing creep groan using a composition containing a fibrous base material, except asbestos, a binder and a friction regulating agent, wherein the binder consists wholly or partially of a modified silicone resin and wherein, in combination, the friction material composition contains between 0.5 and 20% by volume of a zeolite as part of the agent regulating friction. The modified silicone resin is contained in the amount from 3% to 30% by volume of the total composition and is obtained by reacting an oil or a silicone rubber with a phenolic resin of the novolac type. This results in an expensive material and difficult to be produced.

On the other hand, WO2019120648 discloses a hybrid friction lining material and brake pads made therefrom, wherein the positive properties of a low steel friction lining material (so-called Low Steel (LS) friction linings) and an asbestos-free organic friction lining material are attempted to be combined. In preferred embodiments, such hybrid friction material contains: 15 to 22%w (by weight), in particular 17 to 20%w, of at least one binder, 5 to 11%w organic fibers or a mixture of organic fibers, 1 to 20%w, in particular 8 to 14%w, of at least one further organic compound, zero or from 8 to 16%w of inorganic fibers or a mixture of inorganic fibers, 10 to 40%w of at least one inorganic oxide, 6 to 12%w, of at least one inorganic silicate, 13 to 15%w of sulfur or at least one inorganic sulfur compound, 10 to 16%w of carbon or at least one material consisting essentially of carbon, in particular selected from the group consisting of natural graphite, synthetic graphite, petroleum coke, desiccated petroleum coke, carbon black and any mixtures thereof, from 1 to 1.5%w of at least one filler selected from the group of inorganic hydroxides, in particular calcium hydroxide, and zero up to 1%w of at least one metal, in particular iron or iron alloys. Such hybrid material however gives rise to a behavior which is a compromise in term of braking performances and comfort, which may be not optimal or less than optimal for many applications.

CN106015399 discloses a friction material for an electric vehicle brake pad. The friction material comprises, by weight, 25-30 parts of carbon fiber, 10-15 parts of aramid fiber, 40-50 parts of nitrile rubber, 20-30 parts of styrene-butadiene rubber, 10-20 parts of carbon black, 5-12 parts of composite mineral fiber, 1-3 parts of sulfur, 1-4 parts of vermiculite, 2-7 parts of epoxy resin, 6-15 parts of barium sulfate, 3-8 parts of graphite, 0.5-1 parts of an accelerator, 2-4 parts of stabilizer, 1-2 parts of water. However, the brake pad formed from this frictional material does not display any overcoming of the drawbacks in terms of noise and particle emission reduction as well as of improved friction stability. Document WO2022215031A1 shows another example of an asbestos free friction material composition.

### Summary of the invention

The object of the present invention is to develop a new asbestos free friction material composition, which is capable of overcoming the disadvantages of the prior art. In particular, the presently disclosed subject matter is intended to provide an asbestos free friction material composition which substantially reduces the tendency of the friction block to stick against a surface of a friction partner, like a brake disc, cooperating therewith.

The invention is therefore related to a friction material composition as defined in the appended claims.

It is a further object of the invention to provide a friction element, in particular a brake pad or brake shoe, including this friction material composition.

The present disclosure demonstrates how, starting from any known friction material formulation, e.g. that one presented in the SAE 2007 paper by Otsuka, the addition of an appropriate combination of inorganic and elastomeric foam (expanded) materials, simultaneously to the substantial elimination of copper, not only may meet the more stringent US copper regulation but also, and above all, allows to mitigate the stick-slip phenomenon.

In particular, the expanded or foam materials used according to the invention have to have a layer or a tunnel structure. A comparison with a substantially identical NAO composition containing 5% Cu in place of such expanded or foam materials is also contained in the present disclosure.

Further features and advantages of the disclosed subject matter, whether explicitly mentioned or not, will become apparent in view of the disclosure provided below.

This disclosure therefore relates to a friction material composition, belonging to the class of friction materials known as NAO (Non-Asbestos Organic), which aims to obtain an improved stick-slip behavior for the benefit of the creep groan phenomenon and friction stability, with respect to known NAO friction compositions.

Indeed, differently to the known NAO friction compositions, the disclosed friction material composition comprises, in replacement of copper and in combination there between, a silicon rubber and an expanded calcium silicate, like vermiculite, in appropriate amounts. In addition to the silicon rubber and the expanded calcium silicate, an expanded mixed silicate of Aluminum and Magnesium may also be used.

Though obtaining a less effective result, also a combination of silicon rubber and of an expanded mixed silicate of Aluminum and Magnesium may also be used.

Thanks to the combination of the use of any normal (i.e., non-modified) silicon rubber available on the market, which is a non-expensive material, with an expanded silicate, preferably calcium silicate, which is also a raw material available on the market at no-expensive prices, the disclosed friction material composition leads to a reduced stick-slip phenomenon, which, in turns, may positively affect the creep groan noise.

At the same time, copper and any of the alloys thereof, are to be substantially absent. For "substantially absent" here and below, it is to be intended a residual content of Cu or Cu alloys in the disclosed friction material less than 0.5% by weight calculated on the total weight of the friction material composition.

### Brief description of the drawings

Further characteristics and advantages of the present invention will become clear from the following description, from practical and comparative non-limiting examples and with reference to the attached drawings, in which:

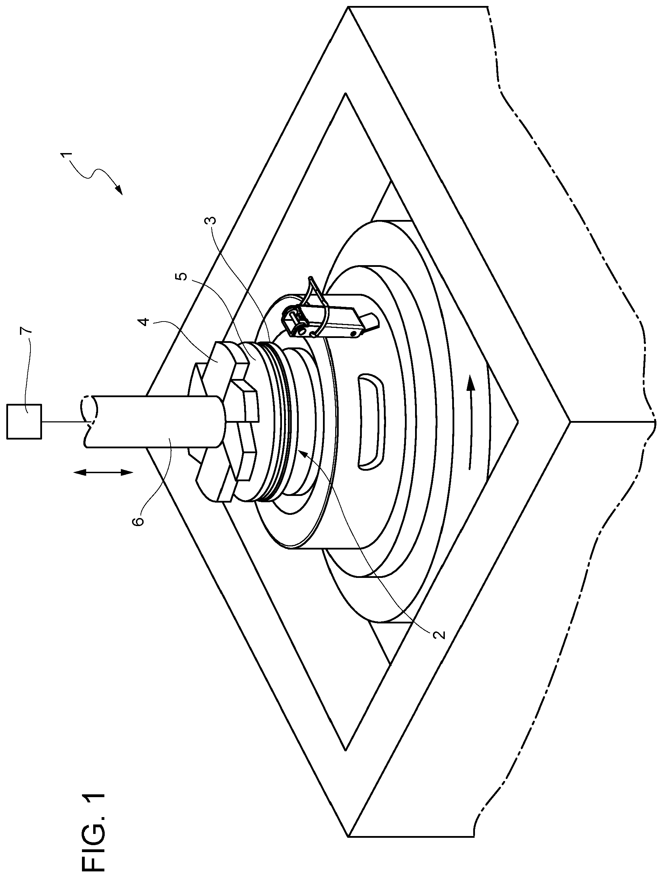

- Figure 1 shows schematically a three-quarter perspective view from the above of a device called tribometer and used as it will be described to test the tribological properties of a friction material element;

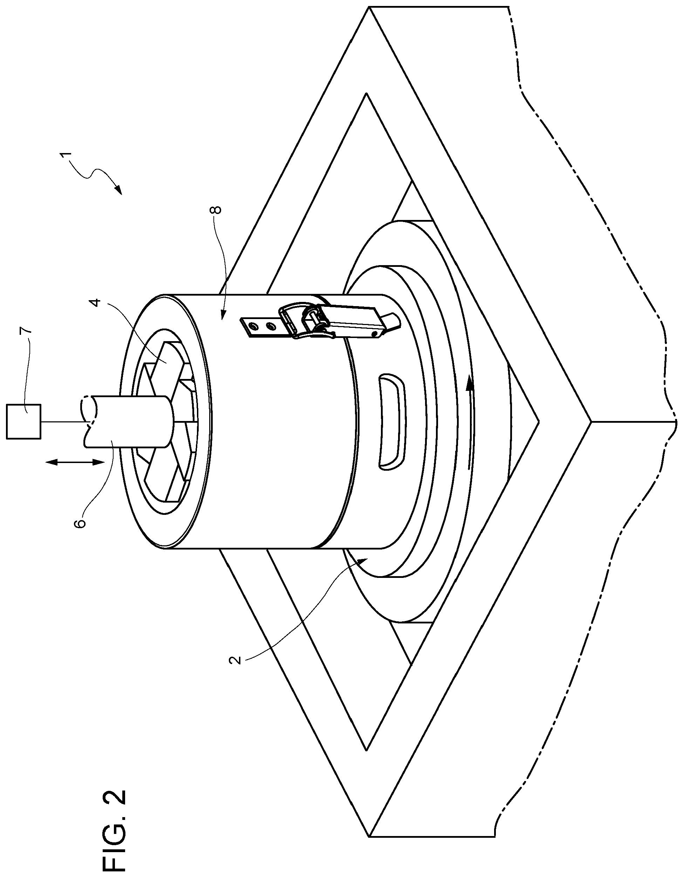

- Figure 2 shows schematically the same three-quarter perspective view from the above of the same device of figure 1 to which a fluid tight sealed climatic chamber has been added in order to carry out the tribological tests in controlled conditions of temperature and humidity;

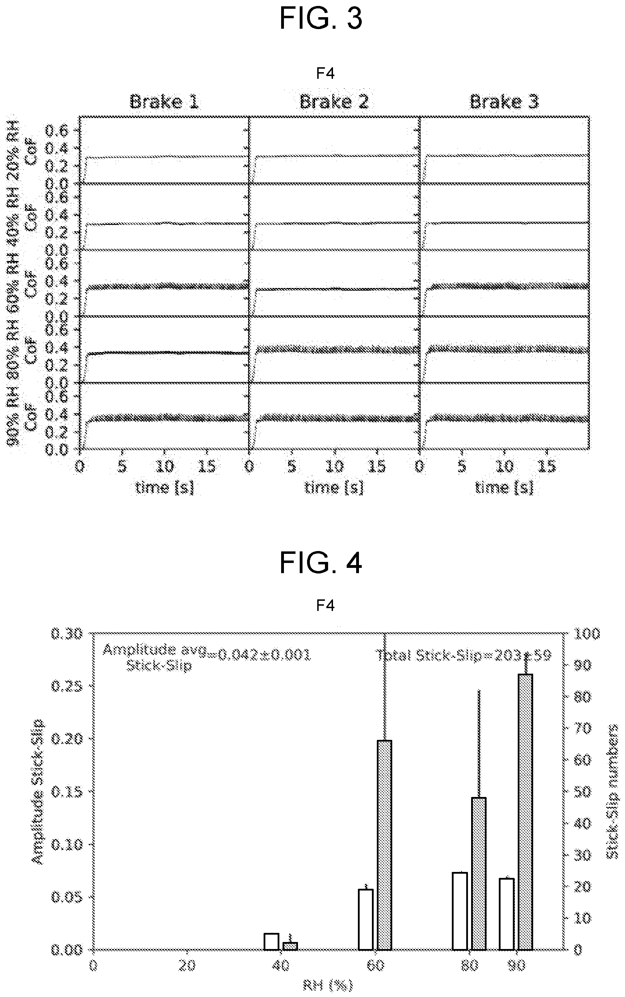

- Figures 3 and 4 show diagrams illustrating the tribological test results at different condition of humidity obtained with the device of figures 1 and 2 for a friction material block made of a non-inventive, first friction material composition, hereby provided as a comparative material, figure 3 showing the behavior of the friction coefficient along time and figure 4 showing as a bar diagram the amplitude and number of the stick-slip events;

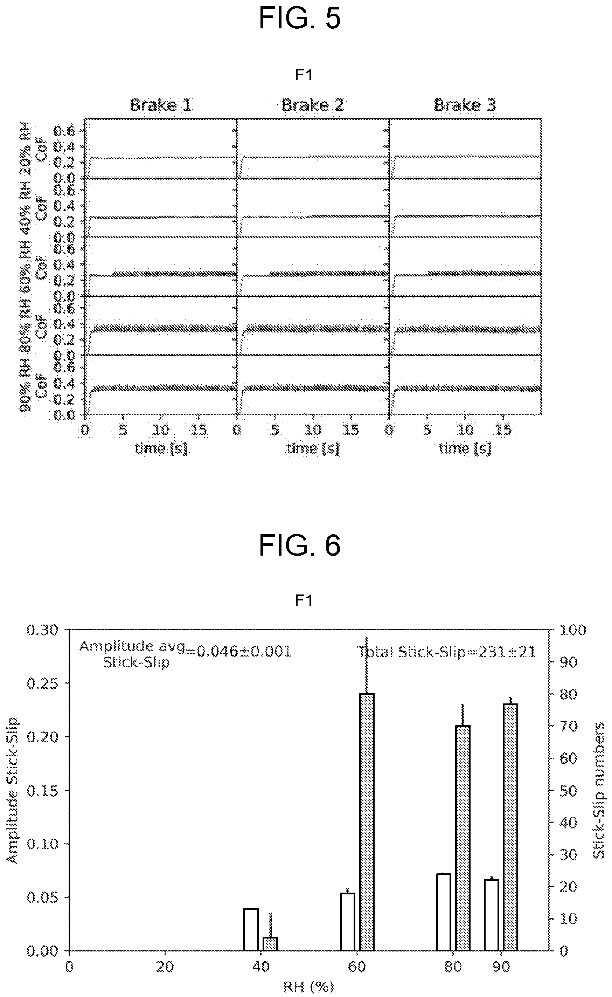

- Figures 5 and 6 show diagrams illustrating the tribological test results at different condition of humidity obtained with the device of figures 1 and 2 for a friction material block made of an inventive, though not optimal, second friction material composition, hereby provided as a non-limiting working example, figure 5 showing the behavior of the friction coefficient along time and figure 6 showing as a bar diagram the amplitude and number of the stick-slip events;

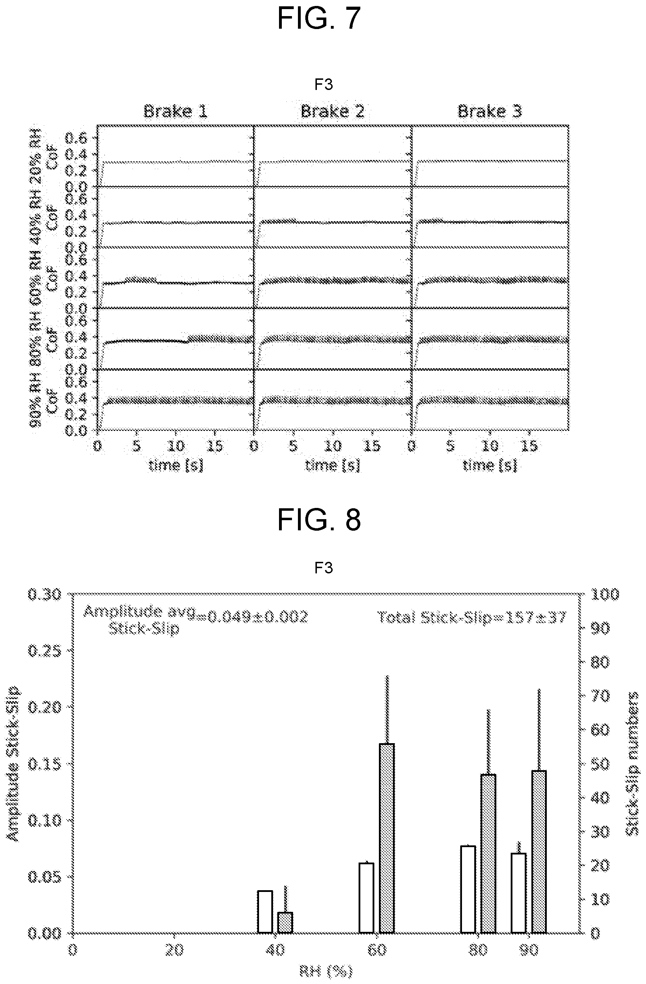

- Figures 7 and 8 show diagrams illustrating the tribological test results at different condition of humidity obtained with the device of figures 1 and 2 for a friction material block made of a third friction material composition prepared according to the prior art and containing copper as one of the components, hereby provided as a reference material, figure 7 showing the behavior of the friction coefficient along time and figure 8 showing as a bar diagram the amplitude and number of the stick-slip events;

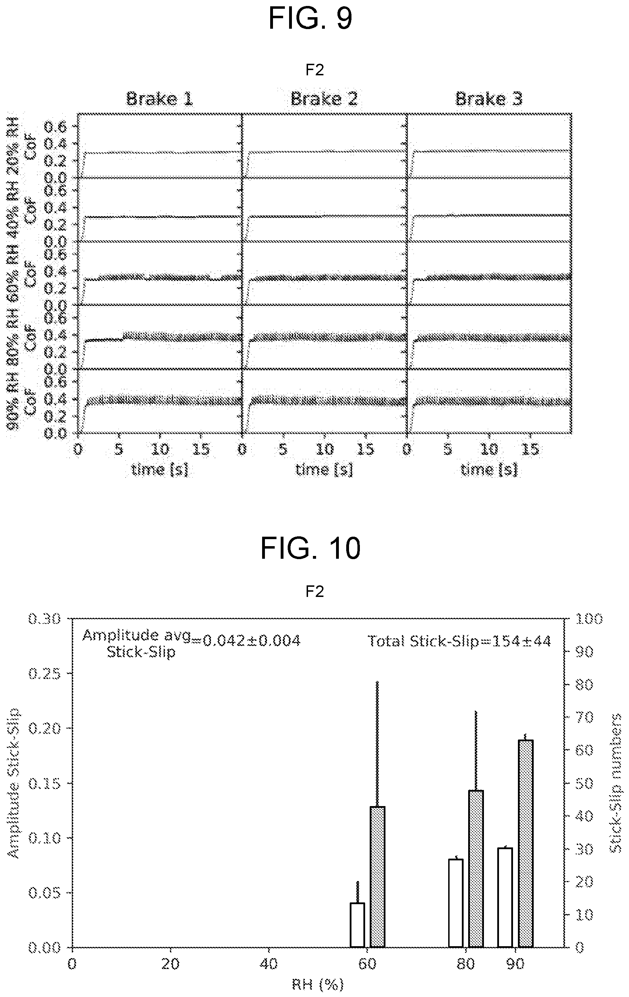

- Figures 9 and 10 show diagrams illustrating the tribological test results at different condition of humidity obtained with the device of figures 1 and 2 for a friction material block made of an inventive, though not optimal, fourth friction material composition, figure 9 showing the behavior of the friction coefficient along time and figure 10 showing as a bar diagram the amplitude and number of the stick-slip events;

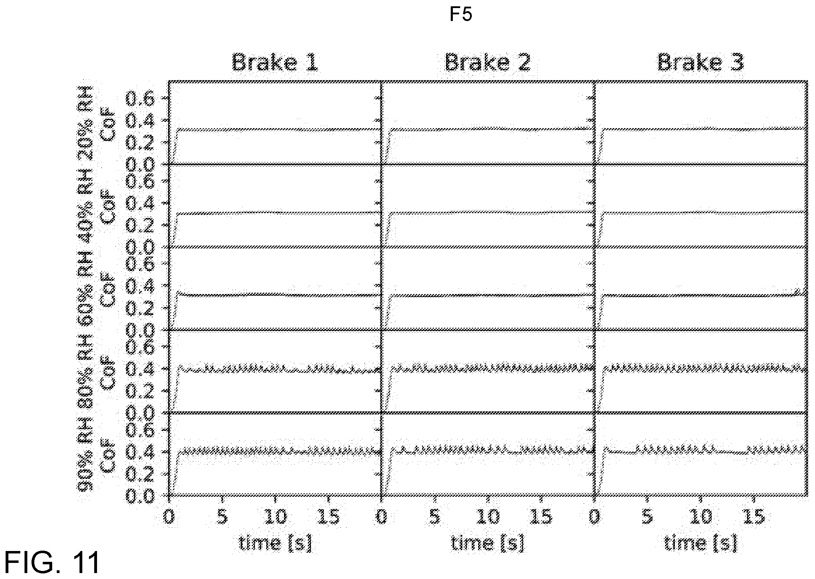

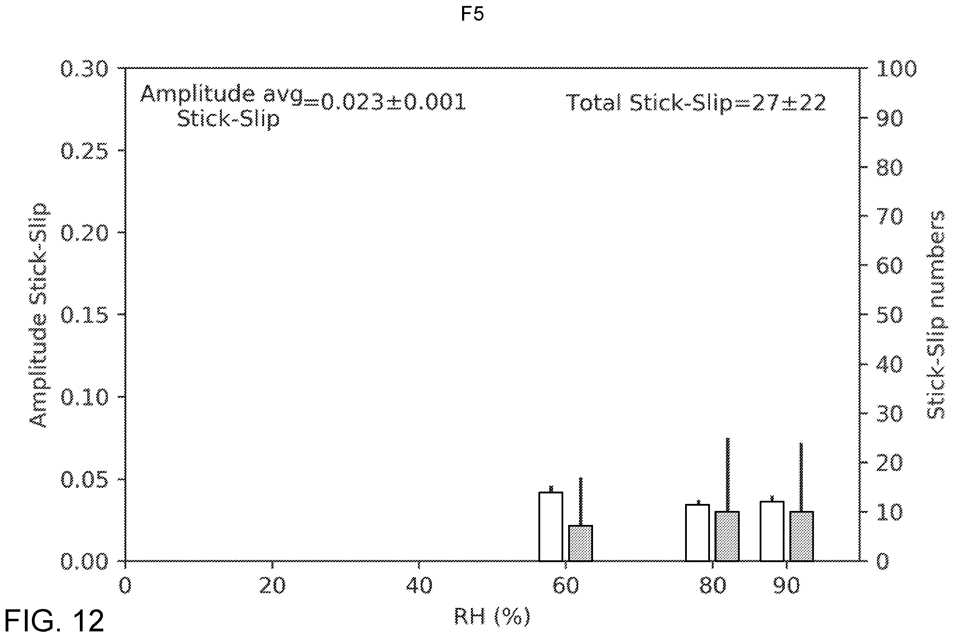

- Figures 11 and 12 show diagrams illustrating the tribological test results at different condition of humidity obtained with the device of figures 1 and 2 for a friction material block made of an inventive, fifth friction material composition, hereby provided as a preferred working example, figure 11 showing the behavior of the friction coefficient along time and figure 12 showing as a bar diagram the amplitude and number of the stick-slip events;

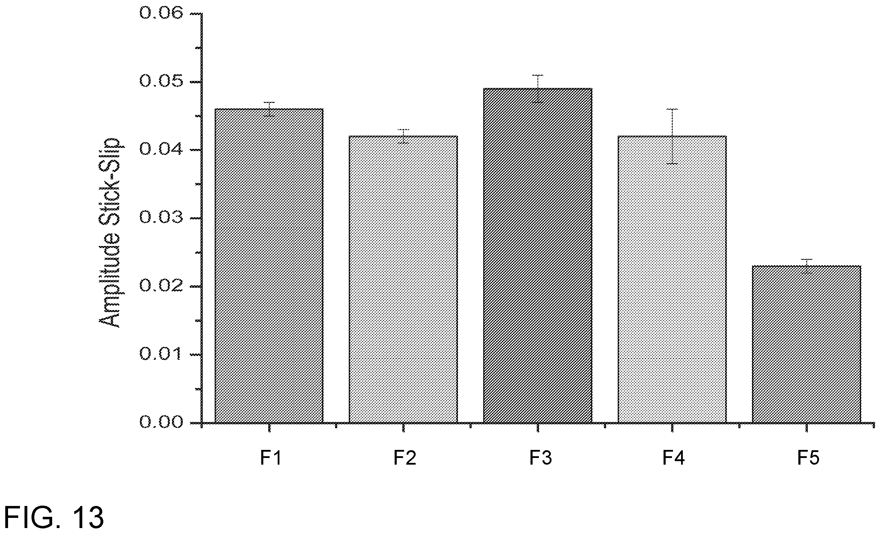

- Figure 13 is a recap bar diagram comparing the average amplitude of the stick-slip events detected by the device of figures 1 and 2 for each one of the five friction material compositions tested; and

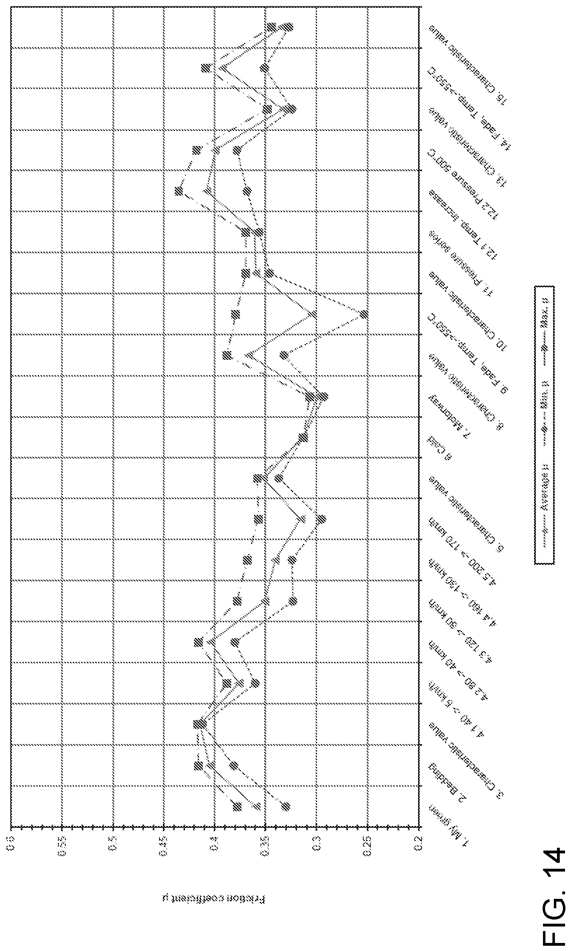

- Figure 14 shows a recap diagram of a standard AK-Master test carried out on a friction element made of a friction material composition according to the preferred embodiment of the invention having tribological tests as shown in figures 11 and 12.

### Detailed description

In more detail, the disclosed asbestos free friction material composition comprises at least one filler, at least a fibrous material, at least one binder, at least one lubricant, at least one expanded (or foam) silicate and, preferably, at least one or more abrasives.

Preferably, the disclosed asbestos free friction material composition comprises also, in conjunction with, i.e., in combination with, the at least one expanded (or foam) silicate, at least one silicon rubber.

The silicon rubber may be preferably a normal, commercial, non-modified silicon rubber, having a density comprised between about 1.33 and about 1.39 grams/cm³ and having a granulometry, i.e., a particle size distribution, such as to have an average D₅₀ comprised between 450 and 550 micron (µm).

Here and in the following, "particle size distribution D₅₀" corresponds to the value of the particle diameter at 50% in the cumulative distribution.

The expanded (or foam) silicate may be any expanded silicate chemically compatible with the other raw materials contained in the friction material mixture and preferably is chosen in the group consisting of: expanded Al, Mg silicate, expanded vermiculite, expanded calcium silicate, any mixture thereof.

Most preferably, more than one expanded or foam silicates are used in the asbestos free friction material of the present disclosure, which therefore may include, in combination, an expanded calcium silicate and an expanded Al, Mg silicate or expanded vermiculite.

The expanded calcium silicate is commercially available as a lightweight filler for e.g., concrete mixtures for building constructions. An expanded calcium silicate may be obtained, e.g., according to US3998650A.

Most preferably the expanded calcium silicate to be used in the present invention may have an apparent density below 0.5 gr/cm³.

According to preferred embodiment of the present invention, the expanded Al, Mg silicate / expanded vermiculite to be used according to the present disclosure may have an apparent density preferably comprised between 0.08 and 0.12 gr/cm³ (namely between 80-120 kg/m³).

The expanded Al, Mg silicate / expanded vermiculite to be used according to the present disclosure may have a particle size distribution such that the D₅₀ is comprised between 0.8 and 1 mm.

The ratio between the content in weight of the silicon rubber and that of the expanded/foam silicate may be preferably 1:3 in case of expanded Al, Mg silicate or expanded vermiculite, and 1:2 in case of expanded calcium silicate.

The ratio between the content in weight of expanded calcium silicate and that of expanded Al, Mg silicate (or expanded vermiculite), when used together, may be preferably 2:3.

Other than the silicon rubber and the expanded silicates, the other components of the disclosed friction material composition, above mentioned, may be components used in frictional materials already known in the art.

In particular, the at least one fibrous material can be selected from the group consisting of inorganic fibers, organic fibers, metallic fibers and any combination thereof.

Preferably, the at least one fibrous material consists in organic fibers selected from the group consisting of polyacrylic fibers, polyaramid fibers, aramid fibers, cellulose fibers and mixtures thereof.

The organic fibers may be, preferably but not exclusively, contained in the friction material composition of the present disclosure as a part of the organic binder, since they may have the main object to increase the strength thereof under the operative working conditions of the brake pads/shoes which may be manufactured from the friction material composition of the present disclosure.

The at least one binder is preferably an organic binder and may be selected from the group consisting of phenolic resins, epoxy resins, siliconic resins, modified phenolic resins, melamminic resins, polymmide resins and mixtures thereof.

The at least one lubricant may consist, preferably but not exclusively, of a sulphide-based lubricant selected from the group consisting in metal sulfides of Sn, Zn, Fe, Mo, and mixtures thereof.

Numerous materials may be used as organic or inorganic fillers. Inorganic fillers may be selected from the group consisting of: barite, mineral fibers, glass fiber, rockwood, phillosilicates other than vermiculite (e.g. mica, talc, etc.), inorganic hydroxides of Calcium, Magnesium, Potassium, and any mixture thereof.

Moreover, according to an aspect of the present invention, as the at least one filler, the friction material composition of the present disclosure has to include one or more titanates, chosen among those commercially available.

The content in titanates may be, preferably but not exclusively, about 20% by weight on the total weight of the friction composition and may be anyway comprised between 8% and 25% by weight on the total weight of the friction composition.

The at least one or more abrasives comprise at least one soft abrasive having a Mohs hardness of below 7 and at least one hard abrasive having a Mohs hardness of above 7.

The ratio between the content in weight of the soft abrasive and of the hard abrasive is ranging from 1:1 to 4:1 and may be preferably 2:1.

Hard abrasives (i.e. having a Mohs hardness of above 7) have, preferably but not exclusively, a roundish-shape and are selected, preferably but not exclusively, in the group consisting of zirconia, alumina, corundum, silicon carbide, tungsten carbide, zirconium carbide, zirconium silicate, boron nitride and any mixture thereof.

Soft abrasive (i.e., having a Mohs hardness of below 7) may be selected, preferably but not exclusively, in the group consisting of magnesia, chromite, magnetite, hematite, quartz, zinc oxides, tin oxides, barium sulphate, silicate, fluoride and any mixture thereof.

According to a preferred embodiment of the present invention, the disclosed friction material composition is copper free.

Here and in the following, the expression "copper-free" is to be understood to imply a content of copper and/or of copper containing materials, like copper alloys, of, or lower than, 0.5% by weight.

The at least one metal or a mixture of metals, when present in the disclosed friction material composition, does not consist of copper and/or any copper alloys, but it is selected from the group consisting of iron, steel, stainless steel, tin, zinc, and any alloy thereof in powder or fiber form.

In addition, the disclosed friction material composition may comprise organic additives selected from the group consisting of polytetrafluoroethylene, friction dust, cashew dust, rubbers other than silicon rubber, e.g., NBR, SBR, etc.

In a further embodiment of the present invention, an average friction material composition may be as follows (% is in weight - in the "inorganic fillers" are included the lubricants as mentioned above and is not included barite, which, according to one aspect of this disclosure, is to be necessarily present alone or in combination with other fillers):

| | |
|---|---|
| ORGANICS | 8% |
| PHENOLIC RESIN | 8% |
| INORGANIC FILLER | 25% |
| TITANATE A (e.g., Terraces^{®} TF-L) | 10% |
| TITANATE B (e.g., Terraces^{®} PM) | 10% |
| BARITE | 27 - 33% |
| GRAPHITE | 6% |
| SILICON RUBBER | 1% |
| EXPANDED SILICATES | 2 - 5% |

The invention lastly relates also to a friction element, in particular a brake pad or shoe, presenting a layer of friction material made from the friction material composition described above.

The invention further relates to a braking system comprising a member to be braked, constituted by a brake disc or brake drum made of cast iron or steel and at least one braking element constituted by a brake pad or shoe which is designed to cooperate by means of friction with the member to be braked, wherein the braking member presents a friction layer which is intended to cooperate with the member to be braked and which is made of the friction material composition described above.

### Exemplary modes of carrying out the teaching of the present disclosure

Inventive and comparative examples are reported herein by way of illustration and are not intended to limit the invention.

### Example 1

Five formulations were prepared marked as "F1", "F2", "F3", "F4" and "F5", according to the following Table 1. The components shown in Table 1 are indicated in percentage values by weight of the total weight of the composition.

The friction material compositions according to the invention are indicated with "F1" and "F5" and they differ solely for the addition to the basic formula of "F1" of a second expanded silicate, according to a preferred embodiment of the invention.

The comparative friction material compositions are indicated as "F2", "F3" and "F4".

"F3" is a Reference friction composition and substantially corresponds to the friction material disclosed by Otsuka in SAE2007 except that copper originally disclosed in SAE2007 has been eliminated and replaced with slight additions in the other components, in particular barite.

"F2" and "F4" have the same composition of the two inventive mixtures "F1" and "F5" except that:
- in "F2" silicon rubber is missing and compensated with a corresponding added amount in barite, which is an inert inorganic filler; and
- in "F4" the silicon rubber is present but any expanded silicate is missing and compensated with a corresponding added amount in barite.

The total for each column in table 1 is 100 (100% by weight):

**TABLE 1**

| | F1 | F2 | F3 | F4 | F5 |
|---|---|---|---|---|---|
| | A | B | C | D | E |
| Organics | 8 | 8 | 8 | 8 | 8 |
| Phenolic resin | 8 | 8 | 8 | 8 | 8 |
| Inorganic Filler | 25 | 25 | 25 | 25 | 25 |
| TF-L | 10 | 10 | 10 | 10 | 10 |
| PM | 10 | 10 | 10 | 10 | 10 |
| Barite | 29 | 30 | 33 | 32 | 27 |
| Graphite | 6 | 6 | 6 | 6 | 6 |
| Silicon Rubber | 1 | | | 1 | 1 |
| Expanded Calcium silicate | | | | | 2 |
| Expanded Al, Mg silicate | 3 | 3 | | | 3 |

The components shown in Table 1 were uniformly mixed in a Horizontal Mixer (e.g. Loedige kind mixer) and molded in a mold under a pressure of 20 tons for 3 minutes at a temperature of 160 °C, then cured from 10 minutes to 10 hours at temperature ranging from 150°C to 400°C, producing five series of friction materials blocks for each different composition reported in table 1.

Each block of friction material so obtained is made integral with identical metal supports consisting in flat steel plates (back-plates) to form vehicle brake pads.

### Example 2: Tribological Tests

For each series of brake pads produced as in the example 1 with the same friction material composition according to each one of the friction material compositions reported in table 1, a first number of friction material blocks have been tested by means of a device (tribometer) as shown in figures 1 and 2 using the following test parameters:
- rotor speed: 0,1-5000 rpm
- Torque: 0,01-5 Nm
- Maximum load force: 2000 N.

With reference to figures 1 and 2, a test device is indicated, as a whole, with the reference number 1. The test device 1 and all the other elements/components which will be described herein below are illustrated in figures 1 and 2 by way of example only and in a purely schematic way only without any pretense of verisimilitude.

The test device 1 comprises a motorized rotor 2, which is configured to receive during the tests a known brake disc 3 to rotate it at a predetermined speed comprised between 0.5 and 5,000 rpm, e.g., in the direction of the arrow.

Device 1 also comprises a sample holder 4 configured to receive during tests one brake pad 5 or a friction material block thereof, in the case in point the brake pads produced in example 1, one at a time. The sample holder 4 is held by a shaft 6 which is configured to move up and down according to the direction of the arrows in figures 1 and 2 to press a brake pad / friction material block against the brake disk with a prefixed load force F of maximum 2,000 Nw. The shaft 6 is connected in known manner with known force and torque sensors, indicated schematically as a whole with a single block numbered 7.

Finally, device 1 comprises also a climatic chamber 8 of known type (figure 2), which may be mounted in device 1, so as to envelope /enclose therein both the brake disc 3 and the brake pad / friction pad 5. The climatic chamber 8 is configured in order to generate there within a controlled environment with controlled humidity, variable between 10% and 90% of relative humidity (RH).

Accordingly, by applying to holder 4 a known vertical pressing force and by rotating rotor 2 at known speeds is possible to brake the rotor 2, by means of the test sample held by the sample holder and to detect the torque by means of sensors 7 in different humidity conditions. For instance, the test may be carried out as follows:
- apply a pressing force F to press the sample 5 against the brake disc 2, which is stationary;
- start rotating brake disc 3 by rotating the motorized rotor 2;
- measuring the torque and force by means of sensors 7;
- calculate in real time the instant coefficient of friction CoF during the entire duration of the test.

The test has been carried out cutting from the brake pads / friction pads produced in example 1 a number of samples measuring 10 x 10 mm to be mounted on the sample holder 4 and using a cast iron brake discs 3. For each friction material, a new disc has been used for each measure. The instant coefficient of friction is calculated using the formula: $CoF = \frac{Tz}{Fz ⋅ {r}_{rff}}$ Where:
- Tz is the measured torque;
- Fz is the load force;
- Reff is the effective radius at which the sample is mounted on the sample holder;

During the test, especially at higher levels of relative humidity, there will be at low rotation speeds the stick-slip event, where the coefficient of friction shift instant by instant between a static friction coefficient CoFₛ and a dynamic friction coefficient CoF_{d}, giving raise to a peak in a graphic CoF vs. time. It is therefore possible to calculate the amplitude of variation (amplitude of the peak) of the friction coefficient between static and dynamic, instant by instant, using the formula: $Δ CoF = {CoF}_{s} - {CoF}_{d}$

By means of device 1 and of a computer it is therefore possible to obtain graphics of the coefficient of friction along time and at different degrees of relative humidity as shown in figures 3, 5, 7, 9 and 11 for each type of sample tested and therefore for each one of the friction material compositions as listed in table 1.

The test for each sample of different friction material composition is repeated three times and the sum of the values obtained (amplitude and number of stick-slip events) is plotted in the bar graphics of figures 4, 6, 8, 10 and 12.

### Example 3: Discussion of the Test Results

By comparing with attention the graphics of figures 4, 6, 8, 10 and 12 it is evident that the material F5 (figure 12) is the best one, when compared with the reference material F3, taking into account the tendency to undergo stick-slip events: the number of events is quite low and the events are present only when the level of relative humidity is relatively high (up to 60%). Moreover, the amplitude of the events is quite small, i.e. the coefficient of friction tends to remain substantially constant. On the contrary, in material F3 (Figure 8) the number and amplitude of stick-slip events is quite high, and the events starts already at 40% of relative humidity, which is a "normal" level in the natural environment (i.e. in a normal day, not dry and not dump), so that it is possible to conclude that the reference composition frequently presents stick-slip events in any whether condition.

Figures 4 and 10 shows respectively the behavior of the materials F4, containing in addition to the reference material silicon rubber only, and of the material F2, containing in addition to the reference material expanded Al, Mg silicate (expanded vermiculite) only.

Material F4 having the addition of silicon rubber shows (Figure 4) results comparable to those of the reference material F3.

Material F2 having the addition of expanded vermiculite (or other equivalent Al, Mg silicate) does not present stick-slip events at 40% relative humidity; moreover, at a high relative humidity, it has a better result (in comparison with F3) at 60% relative humidity only, while at a higher humidity it has a comparable behavior.

Finally, material F1 having the addition of both silicon rubber and expanded vermiculite, in combination, shows apparently a worse result in comparison to the preceding one, since it shows stick-slip events already at 40% relative humidity, but the number of events and, above all, the amplitude of the events is lower when compared with the reference material F3, and remarkably lower especially at 60% relative humidity and above.

From the test results, it is possible to conclude that:
- The effect of the addition of expanded and elastic material on the stick-slip events and accordingly on the generation of the creep groan phenomenon is quite unpredictable;
- The sole addition of an elastic material like silicon rubber has apparently not remarkable effect;
- On the contrary, the addition of an expanded silicate alone, like e.g., expanded vermiculite, has positive effects and brings to disappearance of the stick-slip event at levels of relative humidity which are most frequent in the natural environment;
- The simultaneous addition of silicon rubber and of an expanded silicate brings to put the stick-slip events under control at all different levels of humidity;
- When two different expanded silicates are used in combination together with the silicon rubber the best results are obtained, with a substantial reduction, up to almost the disappearance, of the stick-slip events and, accordingly, of the creep groan phenomenon.

Finally, from the recap graphic shown in figure 13, which compares solely the average amplitude of the stick-slip events (so representing solely a partial overview of the connected physical phenomena), it is evident that all the materials F2, F4 and F5 present better results than the reference material F3. Apparently, the material F2 (inventive) shows a behavior similar to that of material F4 (non-inventive), but, as underlined above, it does not present stick-slip events at 40% relative humidity, while material F4 presents such events, even if in a reduced number.

### Example 4: AK Master Test

In order to understand whether or not the addition of silicon rubber and of metal silicates may affect the braking performances the batches of brake pads produced in the manner described in Example 1 with material F5, which contain all these added material together, were subjected to an efficiency test according to the known AKM Master Test, including: settling braking, braking at different fluid pressures, "cold braking" (<50 ° C) evaluation, highway simulation braking, two sets of high energy braking (first FADE test) interspersed with a series of recovery braking. From this test it is also possible to extrapolate, in a way known to those skilled in the art, the general behavior of the fiction material mixture compositions and the coefficient of friction during the whole test duration.

The results obtained are illustrated in Figure 14, which schematically represents an extract of the significant data of the experimental curves obtained. The two hatched graph in figure 14 show the trend along the different steps of the test of minimum and maximum values of the coefficient of friction observed (calculated), while the solid line graph shows the trend along the different steps of the test of the average value of the coefficient of friction.

The experimental results showed that the presence of the three additional raw materials substantially does not influence the braking performances and that, as it can be appreciated, the coefficient of friction does not remarkably vary and anyway remain well within more than acceptable values along all the steps of the test.

All the aims of the present disclosure are therefore fulfilled.

### Certain Terminology

Although certain braking devices, systems, and methods have been disclosed in the context of certain example embodiments, it will be understood by those skilled in the art that the scope of this disclosure extends beyond the specifically disclosed embodiments to other alternative embodiments and/or uses of the embodiments and certain modifications and equivalents thereof, like brake shows for braking systems based on brake drums. Use with any structure is expressly within the scope of this invention. Various features and aspects of the disclosed embodiments can be combined with or substituted for one another in order to form varying modes of the assembly. The scope of this disclosure should not be limited by the particular disclosed embodiments described herein.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Unless stated otherwise, the terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. Likewise, the term "generally" as used herein represents a value, amount, or characteristic that predominantly includes or tends toward a particular value, amount, or characteristic.

## Claims

1. An asbestos free friction material composition comprising at least one filler, at least a fibrous material selected from the group consisting of inorganic fibers, organic fibers, metallic fibers and any combination thereof, at least one organic binder, at least one lubricant and/or at least one or more abrasives,
**characterized in that** it further includes, in combination:
- at least one silicon rubber, and
- at least one expanded or foam silicate.

2. The asbestos free friction material composition according to claim 1, **characterized in that** the silicon rubber is a non-modified silicon rubber, having a density comprised between about 1.33 and about 1.39 grams/cm³ and having a particle size distribution, such as to have an average D₅₀ comprised between 450 and 550 micron (µm).

3. The asbestos free friction material composition according to anyone of the preceding claims, **characterized in that** the expanded or foam silicate is chemically compatible with the other raw materials contained in the friction material composition and is chosen in the group consisting of: expanded Al, Mg silicate, expanded vermiculite, expanded calcium silicate, any mixture thereof.

4. The asbestos free friction material composition according to anyone of the preceding claims, **characterized in that** it contains one single expanded or foam silicate and wherein the expanded or foam silicate is an expanded calcium silicate.

5. The asbestos free friction material composition according to anyone of the preceding claims 1 to 3, **characterized in that** it contains one single expanded or foam silicate and wherein the expanded or foam silicate is an expanded Al, Mg silicate or expanded vermiculite.

6. The asbestos free friction material composition according to anyone of the preceding claims, **characterized in that** it includes in combination:
- at least one silicon rubber,
- at least an expanded Aluminum silicate or an expanded vermiculite,
- at least an expanded calcium silicate.

7. The asbestos free friction material composition according to anyone of the preceding claims, **characterized in that** said expanded Al, Mg silicate or expanded vermiculite has an apparent density comprised between 0.08 and 0.12 gr/cm³ (namely between 80-120 kg/m³).

8. The asbestos free friction material composition according to anyone of the preceding claims, **characterized in that** said expanded Al, Mg silicate or expanded vermiculite has a particle size distribution such that the D₅₀ is comprised between 0.8 and 1 mm.

9. The asbestos free friction material composition according to claim 1, **characterized in that** the ratio between the content in weight of the silicon rubber and that of the expanded or foam silicate is 1:3 in case of expanded Al, Mg silicate or expanded vermiculite, and 1:2 in case of expanded calcium silicate.

10. The asbestos free friction material composition according to anyone of the preceding claims, **characterized in that** the ratio between the content in weight of an expanded calcium silicate and that of an expanded Al, Mg silicate or vermiculite, when they are simultaneously present together, is 2:3.

11. The asbestos free friction material composition according to any one of the preceding claims, **characterized in that** the at least one fibrous material consists in organic fibers selected from the group consisting of polyacrylic fibers, polyaramid fibers, aramid fibers, cellulose fibers, any mixture thereof; and/or of inorganic or metallic fibers.

12. The asbestos free friction material composition according to any one of the preceding claims, **characterized in that** it contains at least one lubricant consisting of a sulphide-based lubricant selected from the group consisting of the metal sulfides of Sn, Zn, Fe, Mo, and mixtures thereof.

13. The asbestos free friction material composition according to any one of the preceding claims, **characterized in that** it comprises at least one titanate, preferably in a quantity comprised between 8% and 25% in weight calculated on the total weight of the composition.

14. The asbestos free friction material composition according to any one of the preceding claims, **characterized in that** it is free of copper and of any copper alloy.

15. The asbestos free friction material composition according to any one of the preceding claims, **characterized in that** it comprises at least one metal, except than copper and copper alloys, selected from the group consisting of iron, steel, stainless steel, tin, zinc and any alloys thereof in powder or fiber form.

16. The asbestos free friction material composition according to any one of the preceding claims, **characterized in that** the at least one filler is an inorganic filler and includes at least a barite (barium sulphate).

17. The asbestos free friction material composition according to any one of the preceding claims, **characterized in that** it comprises the following components in weight percentage calculated on the total weight of the friction material composition:
| | |
|---|---|
| ORGANICS | 8% |
| PHENOLIC RESIN | 8% |
| INORGANIC FILLER | 25% |
| TITANATE A (e.g., Terraces^{®} TF-L) | 10% |
| TITANATE B (e.g., Terraces^{®} PM) | 10% |
| BARITE | 27 - 33% |
| GRAPHITE | 6% |
| SILICON RUBBER | 1% |
| EXPANDED SILICATES | 2 - 5% |

18. A friction element having a friction layer made with a friction material composition according to any one of the preceding claims.

19. A friction element according to claim 18, **characterized in that** it is a brake pad or brake shoe.

20. A braking system comprising a member to be braked, constituted by a brake disc or brake drum made of cast iron or steel and at least one braking member constituted by a brake pad or brake shoe, adapted to cooperate by friction with the member to be braked, **characterized in that** the braking member has a friction layer intended to cooperate with the member to be braked made of a friction material composition according to claims from 1 to 17

## Patentansprüche

1. Asbestfreie Reibungsmaterialzusammensetzung, umfassend mindestens einen Füllstoff, mindestens ein Fasermaterial, ausgewählt aus der Gruppe bestehend aus anorganischen Fasern, organischen Fasern, metallischen Fasern und beliebigen Kombinationen davon, mindestens ein organisches Bindemittel, mindestens ein Schmiermittel und/oder mindestens ein oder mehrere Schleifmittel, **dadurch gekennzeichnet, dass** sie ferner in Kombination enthält: mindestens einen Silikonkautschuk und mindestens ein expandiertes oder geschäumtes Silikat.

2. Asbestfreie Reibmaterialzusammensetzung nach Anspruch 1, **dadurch gekennzeichnet, dass** der Silikonkautschuk ein nicht modifizierter Silikonkautschuk ist, der eine Dichte zwischen etwa 1,33 und etwa 1,39 Gramm/cm³ aufweist und eine Partikelgrößenverteilung besitzt, die einen mittleren D₅₀-Wert zwischen 450 und 550 Mikrometer (µm) ergibt.

3. Asbestfreie Reibmaterialzusammensetzung nach einem der vorstehenden Ansprüche, **dadurch gekennzeichnet, dass** das expandierte oder geschäumte Silikat chemisch mit den anderen in der Reibmaterialzusammensetzung enthaltenen Rohstoffen verträglich ist und aus der Gruppe ausgewählt ist, bestehend aus: expandiertem Al-Mg-Silikat, expandiertem Vermiculit, expandiertem Calciumsilikat sowie beliebigen Mischungen davon.

4. Asbestfreie Reibmaterialzusammensetzung nach einem der vorstehenden Ansprüche, **dadurch gekennzeichnet, dass** sie ein einziges expandiertes oder geschäumtes Silikat enthält und wobei das expandierte oder geschäumte Silikat ein expandiertes Calciumsilikat ist.

5. Asbestfreie Reibungsmaterialzusammensetzung nach einem der vorstehenden Ansprüche 1 bis 3, **dadurch gekennzeichnet, dass** sie ein einziges expandiertes oder geschäumtes Silikat enthält, wobei das expandierte oder geschäumte Silikat ein expandiertes Al-Mg-Silikat oder expandiertes Vermiculit ist.

6. Asbestfreie Reibmaterialzusammensetzung nach einem der vorstehenden Ansprüche, **dadurch gekennzeichnet, dass** sie in Kombination enthält: mindestens einen Silikonkautschuk, mindestens ein expandiertes Aluminiumsilikat oder ein expandiertes Vermiculit, mindestens ein expandiertes Calciumsilikat.

7. Asbestfreie Reibmaterialzusammensetzung nach einem der vorstehenden Ansprüche, **dadurch gekennzeichnet, dass** das expandierte Al-Mg-Silikat oder der expandierte Vermiculit ein Schüttgewicht zwischen 0,08 und 0,12 g/cm³ (d. h. zwischen 80 und 120 kg/m³) aufweist.

8. Asbestfreie Reibungsmaterialzusammensetzung nach einem der vorstehenden Ansprüche, **dadurch gekennzeichnet, dass** das expandierte Al-Mg-Silikat oder das expandierte Vermiculit eine Partikelgrößenverteilung aufweist, bei der der D₅₀-Wert zwischen 0,8 und 1 mm liegt.

9. Asbestfreie Reibmaterialzusammensetzung nach Anspruch 1, **dadurch gekennzeichnet, dass** das Verhältnis zwischen dem Gewichtsanteil des Silikonkautschuks und dem des expandierten oder geschäumten Silikats bei expandiertem Al-Mg-Silikat oder expandiertem Vermiculit 1:3 und bei expandiertem Calciumsilikat 1:2 beträgt.

10. Asbestfreie Reibungsmaterialzusammensetzung nach einem der vorstehenden Ansprüche, **dadurch gekennzeichnet, dass** das Verhältnis zwischen dem Gewichtsanteil eines expandierten Calciumsilikats und dem eines expandierten Al-Mg-Silikats oder expandierten Vermiculits, wenn diese gleichzeitig vorhanden sind, 2:3 beträgt.

11. Asbestfreie Reibmaterialzusammensetzung nach einem der vorstehenden Ansprüche, **dadurch gekennzeichnet, dass** das mindestens eine Fasermaterial aus organischen Fasern besteht, die aus der Gruppe ausgewählt sind, die aus Polyacrylfasern, Polyaramidfasern, Aramidfasern, Zellulosefasern sowie beliebigen Mischungen davon besteht; und/oder aus anorganischen oder metallischen Fasern.

12. Asbestfreie Reibmaterialzusammensetzung nach einem der vorstehenden Ansprüche, **dadurch gekennzeichnet, dass** sie mindestens ein Schmiermittel enthält, das aus einem Schmiermittel auf Sulfidbasis besteht, ausgewählt aus der Gruppe bestehend aus den Metallsulfiden von Sn, Zn, Fe, Mo und Mischungen davon.

13. Asbestfreie Reibmaterialzusammensetzung nach einem der vorstehenden Ansprüche, **dadurch gekennzeichnet, dass** sie mindestens ein Titanat umfasst, vorzugsweise in einer Menge zwischen 8 und 25 Gewichtsprozent, berechnet auf das Gesamtgewicht der Zusammensetzung.

14. Asbestfreie Reibmaterialzusammensetzung nach einem der vorstehenden Ansprüche, **dadurch gekennzeichnet, dass** sie frei von Kupfer und jeglicher Kupferlegierung ist.

15. Asbestfreie Reibmaterialzusammensetzung nach einem der vorstehenden Ansprüche, **dadurch gekennzeichnet, dass** sie mindestens ein Metall, mit Ausnahme von Kupfer und Kupferlegierungen, enthält, das aus der Gruppe ausgewählt ist, die aus Eisen, Stahl, Edelstahl, Zinn, Zink und beliebigen Legierungen davon in Pulver- oder Faserform besteht.

16. Asbestfreie Reibmaterialzusammensetzung nach einem der vorstehenden Ansprüche, **dadurch gekennzeichnet, dass** der mindestens eine Füllstoff ein anorganischer Füllstoff ist und mindestens ein Baryt (Bariumsulfat) enthält.

17. Asbestfreie Reibmaterialzusammensetzung nach einem der vorstehenden Ansprüche, **dadurch gekennzeichnet, dass** sie die folgenden Komponenten in Gewichtsprozent, berechnet auf das Gesamtgewicht der Reibmaterialzusammensetzung, umfasst:
ORGANISCHE STOFFE 8 %,
PHENOLHARZ 8 %,
ANORGANISCHER FÜLLSTOFF 25 %,
TITANAT A (z. B. Terraces^{®} TF-L) 10 %,
TITANAT B (z. B. Terraces^{®} PM) 10 %,
BARYT 27 bis 33 %,
GRAPHIT 6 %,
SILIKONKAUTSCHUK 1 %,
EXPANDIERTE SILIKATE 2 bis 5 %

18. Reibungselement mit einer Reibschicht, die aus einer Reibmaterialzusammensetzung gemäß einem der vorstehenden Ansprüche hergestellt ist.

19. Reibungselement nach Anspruch 18, **dadurch gekennzeichnet, dass** es sich um einen Bremsbelag oder eine Bremsbacke handelt.

20. Bremssystem, umfassend ein zu bremsendes Bauteil, bestehend aus einer Bremsscheibe oder einer Bremstrommel aus Gusseisen oder Stahl, und mindestens ein Bremselement, bestehend aus einem Bremsbelag oder einer Bremsbacke, das dazu ausgelegt ist, durch Reibung mit dem zu bremsenden Bauteil zusammenzuwirken, **dadurch gekennzeichnet, dass** das Bremselement eine Reibschicht aufweist, die dazu bestimmt ist, mit dem zu bremsenden Bauteil zusammenzuwirken, und aus einer Reibmaterialzusammensetzung gemäß den Ansprüchen 1 bis 17 besteht.

## Revendications

1. Composition de matériau de frottement exempte d'amiante comprenant au moins une charge, au moins un matériau fibreux choisi parmi le groupe constitué de fibres inorganiques, de fibres organiques, de fibres métalliques et de toute combinaison de celles-ci, au moins un liant organique, au moins un lubrifiant et/ou au moins un ou plusieurs abrasifs,
**caractérisée en ce qu'**elle comprend en outre, en combinaison :
- au moins un caoutchouc de silicium, et
- au moins un silicate expansé ou en mousse.

2. Composition de matériau de frottement exempte d'amiante selon la revendication 1, **caractérisée en ce que** le caoutchouc de silicium est un caoutchouc de silicium non modifié, ayant une densité comprise entre environ 1,33 et environ 1,39 gramme/cm³ et présentant une distribution granulométrique telle qu'elle présente une valeur moyenne D₅₀ comprise entre 450 et 550 microns (µm).

3. Composition de matériau de frottement exempte d'amiante selon l'une quelconque des revendications précédentes, **caractérisée en ce que** le silicate expansé ou en mousse est chimiquement compatible avec les autres matières premières contenues dans la composition de matériau de frottement et est choisi dans le groupe constitué par : le silicate d'Al et de Mg expansé, la vermiculite expansée, le silicate de calcium expansé, et tout mélange de ceux-ci.

4. Composition de matériau de frottement exempte d'amiante selon l'une quelconque des revendications précédentes, **caractérisée en ce qu'**elle contient un seul silicate expansé ou en mousse et dans laquelle le silicate expansé ou en mousse est un silicate de calcium expansé.

5. Composition de matériau de frottement exempte d'amiante selon l'une quelconque des revendications 1 à 3 précédentes, **caractérisée en ce qu'**elle contient un seul silicate expansé ou en mousse, et dans laquelle le silicate expansé ou en mousse est un silicate d'Al et de Mg expansé ou de vermiculite expansée.

6. Composition de matériau de frottement exempte d'amiante selon l'une quelconque des revendications précédentes, **caractérisée en ce qu'**elle comprend en combinaison :
- au moins un caoutchouc de silicium,
- au moins un silicate d'aluminium expansé ou une vermiculite expansée,
- au moins un silicate de calcium expansé.

7. Composition de matériau de frottement exempte d'amiante selon l'une quelconque des revendications précédentes, **caractérisée en ce que** ledit silicate d'Al et de Mg expansé ou ladite vermiculite expansée présente une densité apparente comprise entre 0,08 et 0,12g/cm³ (soit entre 80 et 120 kg/m³).

8. Composition de matériau de frottement exempte d'amiante selon l'une quelconque des revendications précédentes, **caractérisée en ce que** ledit silicate d'Al et de Mg expansé ou ladite vermiculite expansée présente une distribution granulométrique telle que la valeur D₅₀ est comprise entre 0,8 et 1mm.

9. Composition de matériau de frottement exempte d'amiante selon la revendication 1, **caractérisée en ce que** le rapport entre la teneur en poids du caoutchouc de silicium et celle du silicate expansé ou en mousse est de 1:3 dans le cas de silicate d'Al et de Mg expansé ou de vermiculite expansée, et de 1:2 dans le cas de silicate de calcium expansé.

10. Composition de matériau de frottement exempte d'amiante selon l'une quelconque des revendications précédentes, **caractérisée en ce que** le rapport entre la teneur en poids d'un silicate de calcium expansé et celle d'un silicate d'Al et de Mg expansé ou de vermiculite expansée, lorsqu'ils sont présents simultanément, est de 2:3.

11. Composition de matériau de frottement exempte d'amiante selon l'une quelconque des revendications précédentes, **caractérisée en ce qu'**au moins un matériau fibreux est constitué de fibres organiques choisies dans le groupe de fibres polyacryliques, de fibres polyaramides, de fibres aramides, de fibres de cellulose, tout mélange de celles-ci ; et/ou de fibres inorganiques ou métalliques.

12. Composition de matériau de frottement exempte d'amiante selon l'une quelconque des revendications précédentes, **caractérisée en ce qu'**elle contient au moins un lubrifiant constitué d'un lubrifiant à base de sulfure choisi parmi le groupe comprenant les sulfures métalliques de Sn, Zn, Fe, Mo et leurs mélanges.

13. Composition de matériau de frottement exempte d'amiante selon l'une quelconque des revendications précédentes, **caractérisée en ce qu'**elle comprend au moins un titanate, de préférence en une quantité comprise entre 8% et 25% en poids, calculée par rapport au poids total de la composition.

14. Composition de matériau de frottement exempte d'amiante selon l'une quelconque des revendications précédentes, **caractérisée en ce qu'**elle est exempte de cuivre et de tout alliage de cuivre.

15. Composition de matériau de frottement exempte d'amiante selon l'une quelconque des revendications précédentes, **caractérisée en ce qu'**elle comprend au moins un métal, à l'exception du cuivre et des alliages de cuivre, choisi dans le groupe constitué de fer, d'acier, d'acier inoxydable, d'étain, de zinc et de n'importe quel de leurs alliages, sous forme de poudre ou de fibres.

16. Composition de matériau de frottement exempte d'amiante selon l'une quelconque des revendications précédentes, **caractérisée en ce que** ladite au moins une charge est une charge inorganique et comprend au moins de la baryte (sulfate de baryum).

17. Composition de matériau de frottement exempte d'amiante selon l'une quelconque des revendications précédentes, **caractérisée en ce qu'**elle comprend les composants suivants, exprimés en pourcentage massique calculé sur le poids total de la composition de matériau de frottement :
| | |
|---|---|
| COMPOSÉS ORGANIQUES | 8% |
| RÉSINE PHÉNOLIQUE | 8% |
| CHARGE INORGANIQUE | 25% |
| TITANATE A (par ex. Terraces^{®} TF-L) | 10% |
| TITANATE B (par ex. Terraces^{®} PM) | 10% |
| BARYTE | 27 à 33% |
| GRAPHITE | 6% |
| CAOUTCHOUC SILICIUM | 1% |
| SILICATES EXPANSÉS | 2 à 5% |

18. Élément de frottement comportant une couche de frottement constituée d'une composition de matériau de frottement selon l'une quelconque des revendications précédentes.

19. Élément de frottement selon la revendication 18, **caractérisé en ce qu'**il s'agit d'un patin de frein ou d'un segment de frein.

20. Système de freinage comprenant un élément à freiner, constitué d'un disque de frein ou d'un tambour de frein en fonte ou en acier, et au moins un élément de freinage constitué d'un patin de frein ou d'un segment de frein, adapté pour coopérer par frottement avec l'élément à freiner, **caractérisé en ce que** l'élément de freinage comporte une couche de frottement destinée à coopérer avec l'élément à freiner, constituée d'une composition de matériau de frottement selon les revendications 1 à 17.
